# EUROPEAN PATENT APPLICATION

(11) **EP 4 322 387 A1**
(43) Date of publication of application: **14.02.2024**
(21) Application number: 22784454.5
(22) Date of filing: 16.03.2022
(51) Int. Cl.: H02M 7/48, E02F 9/20

(54) **INVERTER CONTROL DEVICE AND DRIVING DEVICE**

(30) Priority: 07.04.2021 JP 2021065182
(71) Applicant: Nabtesco Corporation, Tokyo 102-0093 (JP)
(72) Inventor: NAKAMURA, Kazuhito, Tokyo 102-0093 (JP)
(74) Representative: Grünecker Patent- und Rechtsanwälte PartG mbB
(86) International application number: PCT/JP2022/012051
(87) International publication number: WO 2022/215469

(57) **Abstract**

An inverter control apparatus 1 includes: a DC voltage input unit to which a DC voltage is input; a plurality of voltage dividing elements 21-24 provided in series between the high electric potential side line 11 and the low electric potential side line 12, to divide the DC voltage; a plurality of inverters 41 to 44 that convert the divided DC voltage into AC voltage to supply to each of a plurality of motors 51 to 54; an electric power demand information acquisition unit 70 that acquires electric power demand information of each of the motors 51 to 54; and a control unit 60 that controls the conduction state between the high electric potential side terminal and the low electric potential side terminal of each of the plurality of inverters 41 to 44, based on the electric power demand information of each of the motors 51 to 54.

## Description

### BACKGROUND OF THE INVENTION

### 1. Field of the Invention

The present invention relates to an inverter control apparatus.

### 2. Description of the Related Art

As a construction machine used at a construction site, an electric construction machine driven by an electric motor (hereinafter also referred to as a motor) and a hybrid construction machine in which a hydraulic device and an electric motor are used together are known (hereinafter collectively referred to as electric construction machine). An actuator that directly drives each of the driving portions of an electric construction machine by a mechanical element such as a ball screw driven by the rotational power of a motor is called an electro-mechanical actuator (EMA), while an actuator that indirectly drives each of the driving portions of an electric construction machine by a hydraulic device such as a hydraulic pump driven by the rotational power of a motor is called an electro-hydraulic actuator (EHA) .

Patent Literature 1: JP Patent Application Publication No. 2008-88660

### SUMMARY OF THE INVENTION

In case each of the driving portions of an electric construction machine, for example, the lower traveling body, the upper rotating body, the boom, the arm, and the bucket, is driven by a motor, an inverter is provided to each of the driving portions for converting direct current voltage supplied from a common electric power source into alternating current voltage to supply to each of the motors. Usually, the plurality of inverters are provided in parallel between a common high electric potential side line connected to the high electric potential side terminal of the electric power source and a common low electric potential side line connected to the low electric potential side terminal of the electric power source. In this case, a large direct current voltage is always applied to all of the inverters connected in parallel. However, it is rare that all of the driving portions are driven at the maximum load at the same time during the operation of an electric construction machine. As such, the direct current voltage to the inverters of the driving portions that are not driven or have small loads is wasted. The present inventor has recognized the possibility of saving electric power of an electric construction machine by reducing such wasted electric power.

The present invention has been made in consideration of this situation, and its purpose is to provide an inverter control apparatus that enables saving electric power.

In order to solve the above issue, an inverter control apparatus in a certain aspect of the present invention includes: a direct current voltage input unit to which a direct current voltage is input between a high electric potential side line and a low electric potential side line; a plurality of voltage dividing elements provided in series between the high electric potential side line and the low electric potential side line, to divide the direct current voltage; a plurality of inverters that convert the divided direct current voltage, which is input from a high electric potential side terminal connected to a high electric potential side electrode of each of the plurality of voltage dividing elements and a low electric potential side terminal connected to a low electric potential side electrode of each of the plurality of voltage dividing elements, into alternating current voltage to supply to each of a plurality of actuators; an electric power demand information acquisition unit that acquires electric power demand information of each of the plurality of actuators; and a control unit that controls the conduction state between the high electric potential side terminal and the low electric potential side terminal of each of the plurality of inverters, based on the electric power demand information of each of the plurality of actuators.

According to the present aspect, the conduction state between the terminals of each of the plurality of inverters connected in series is controlled, based on the electric power demand information of each of the plurality of actuators. For example, by changing the conduction state between the terminals of the inverter of the actuator with no electric power demand into the complete conductive state, the direct current voltage between the terminals of such an inverter is reduced to zero, thereby reducing the wasted electric power. Furthermore, the surplus electric power is effectively consumed by the other inverter connected in series.

In addition, any combination of the above components, and any conversion of the expression of the present invention among methods, devices, systems, storage media, computer programs and the like are also valid as an aspect of the present invention.

According to the present invention, an inverter control apparatus that enables saving electric power can be provided.

### BRIEF DESCRIPTION OF THE DRAWINGS

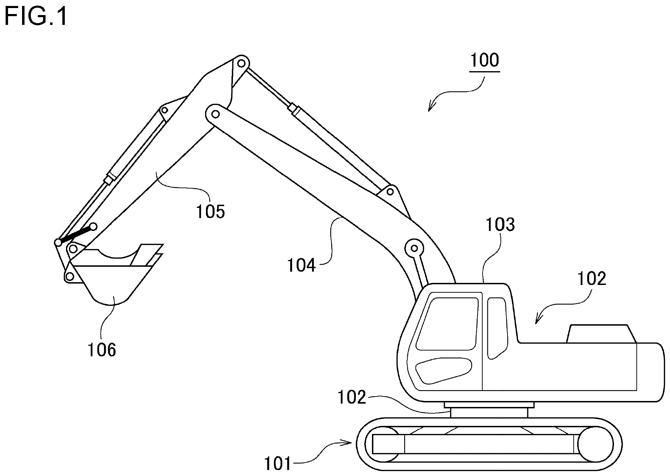

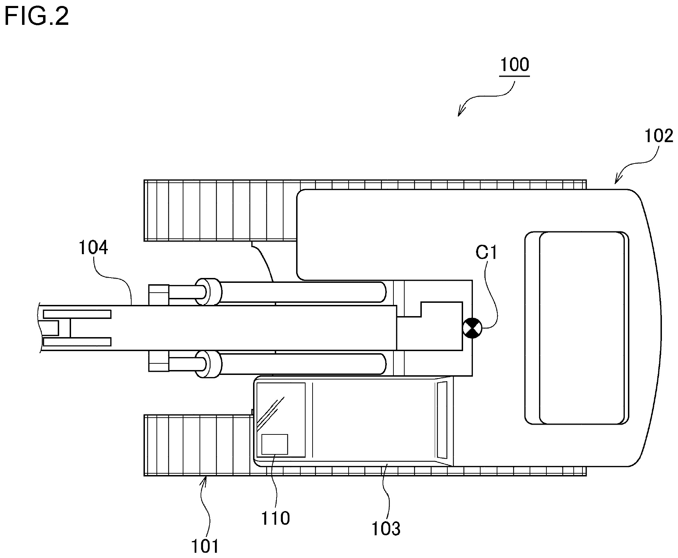

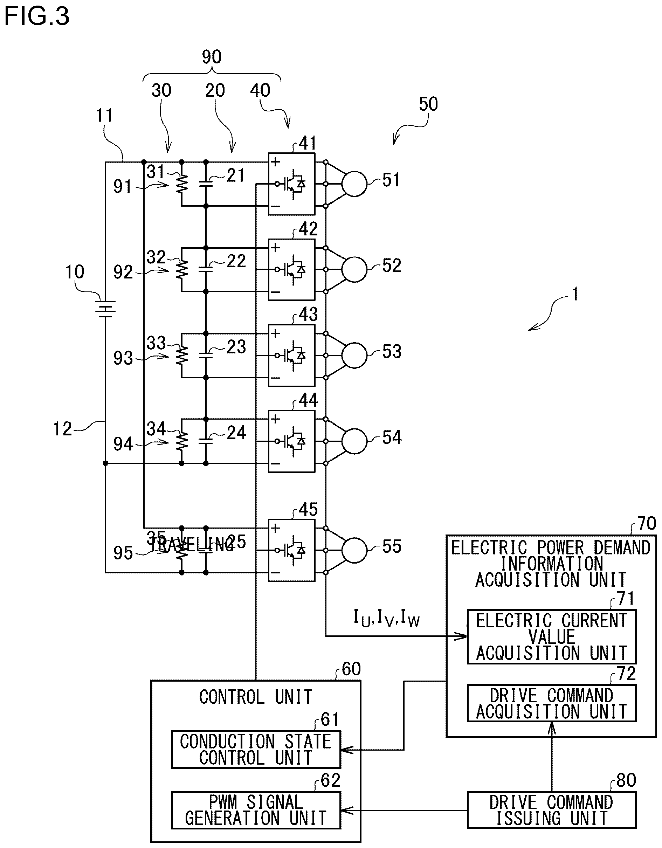

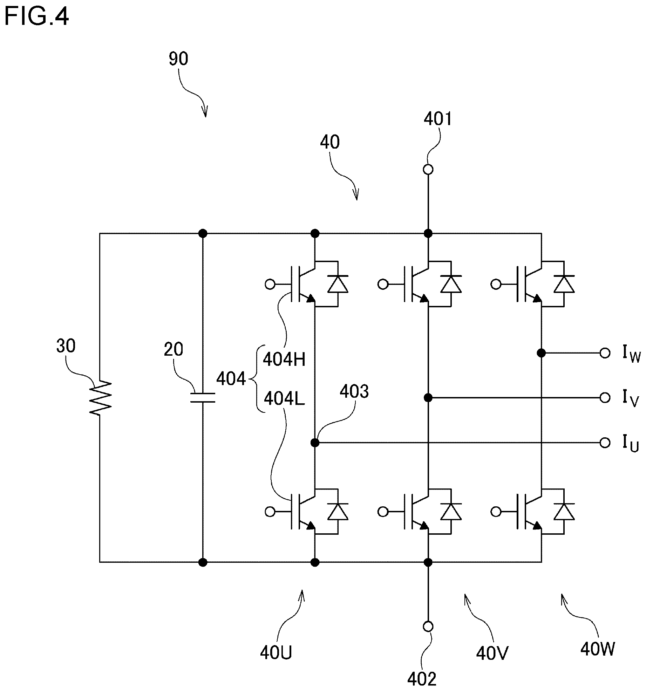

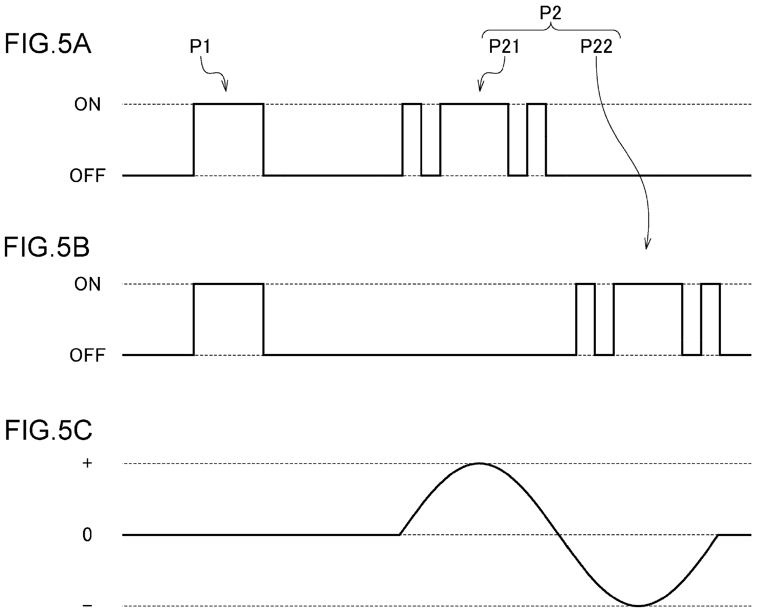

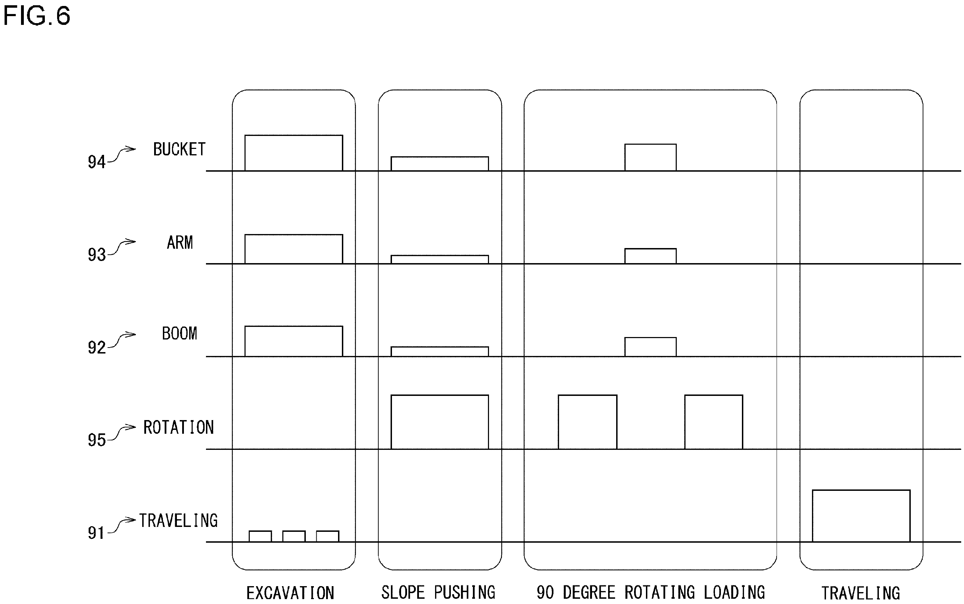

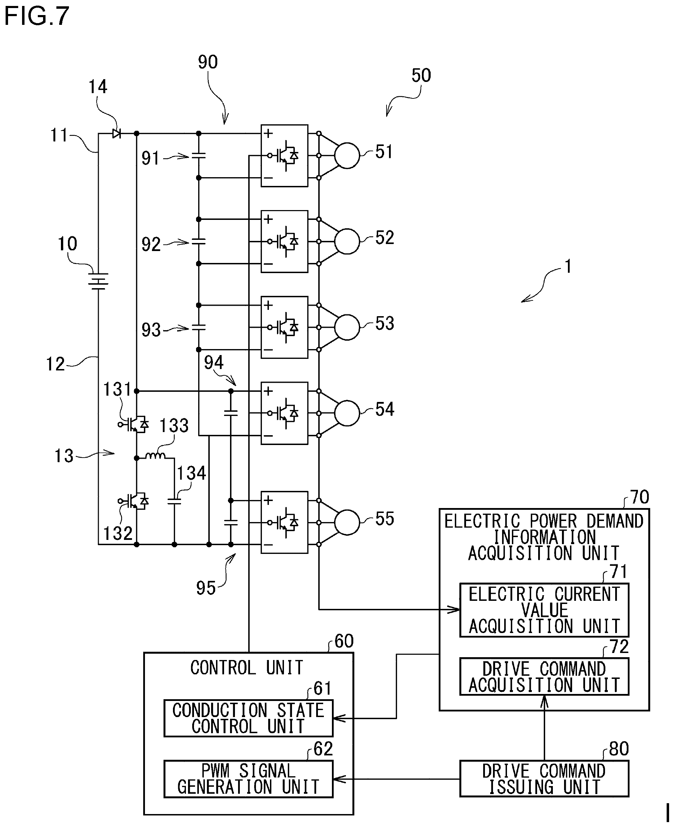

Figure 1 is a schematic configuration diagram of an electric construction machine. Figure 2 is a top view of the electric construction machine. Figure 3 is a schematic configuration diagram of an inverter control apparatus. Figure 4 shows the detailed configuration of a driver corresponding to each of the driving portions of the electric construction machine. Figure 5 is a schematic diagram of a control signal applied by a control unit to each of the control electrodes of a transistor of each of the plurality of inverters. Figure 6 schematically shows the load of each of the driving portions during various operations of the electric construction machine. Figure 7 is a schematic configuration diagram of a variation of the inverter control apparatus.

### DETAILED DESCRIPTION OF THE INVENTION

The inverter control apparatus according to the present invention can be applied to any devices equipped with a plurality of actuators driven by alternating current voltage. As such, devices to which the present invention is applied is not particularly limited, but the present embodiment describes an example of an electric construction machine equipped with a plurality of driving portions driven by actuators. Besides, in the present embodiment, the EMA that directly drives each of the driving portions of the electric construction machine by a mechanical element driven by the rotational power of a motor is illustrated as an actuator, but the present invention can also be applied to the EHA that indirectly drives each of the driving portions of the electric construction machine by a hydraulic device driven by the rotational power of a motor.

Figure 1 is a schematic configuration diagram of an electric construction machine 100. Figure 2 is a top view of the electric construction machine 100. It should be noted that, in the following description, the directions such as forward (or front) and backward (or rear), upper and lower, left and right and the like, are the same as those of the electric construction machine 100. That is, in the following description, the forward proceeding direction of the electric construction machine 100 is simply called the forward direction, the backward receding direction of the electric construction machine 100 is simply called the backward direction, the upper side in the gravity direction is simply called the upper side, the lower side in the gravity direction is simply called the lower side, the right side in the width direction of the vehicle facing forward is simply called the right side, and the left side in the width direction of the vehicle is simply called the left side.

In the electric construction machine 100, which is a construction machine, an upper rotating body 102 is rotatably attached on a lower traveling body 101 that can travel forward and backward on the ground. The upper rotating body 102 is driven to rotate with respect to the lower traveling body 101 by an inverter control apparatus 1 (refer to Figure 3) provided in the electric construction machine 100.

The upper rotating body 102 has a cab 103 on the front left side, and a boom 104 is attached in its front center that can be raised and lowered. An arm 105 is attached to the remote end of the boom 104, which can be bent up and down. A bucket 106 is attached to the remote end of the arm 105, which can be bent up and down.

A gyro sensor 110 is attached on the front left side of the cab 103. In other words, the gyro sensor 110 is attached in the upper rotating body 102 at the maximum distance from the rotation center C1. The gyro sensor 110 is a sensor capable of detecting the tilt angle, the tilt direction, the rotational position, and the rotational angular speed of the cab 103 (the lower traveling body 101 and the upper rotating body 102). It should be noted that the tilt direction refers to the upward direction or the downward direction of tilting.

The lower traveling body 101, the upper rotating body 102, the boom 104, the arm 105, and the bucket 106 are hereinafter collectively referred to as the driving portion(s) of the electric construction machine 100. As such, the electric construction machine 100 shown in Figure 1 and Figure 2 is a construction machine with five driving portions. It should be noted that the lower traveling body 101 constitutes a traveling unit that can travel on the ground, the upper rotating body 102 constitutes a rotating unit that can rotate with respect to the traveling unit, and the boom 104, the arm 105 and the bucket 106 constitute working units that are attached to the rotating unit to carry out works.

Figure 3 is a schematic configuration diagram of an inverter control apparatus 1. The inverter control apparatus 1 is equipped with a direct current electric power source 10, five capacitors 21 to 25 (collectively referred to as the capacitor(s) 20) provided corresponding to five driving portions, five resistors 31 to 35 (collectively referred to as the resistor(s) 30), and five inverters 41 to 45 (collectively referred to as the inverter(s) 40). The five inverters 41 to 45 convert the direct current voltage input from the direct current electric power source 10 into alternating current voltage, and supply it to the five motors 51 to 55 (collectively referred to as the motor(s) 50) as actuators of each of the driving portions, respectively. The respective sets of the capacitors 21 to 25, the resistors 31 to 35, and the inverters 41 to 45, which are provided corresponding to the five driving portions, are hereinafter collectively referred to as the drivers 91 to 95. Besides, the five drivers 91 to 95 are also collectively referred to as the driver(s) 90.

Figure 4 shows the detailed configuration of the driver 90 corresponding to each of the driving portions. The inverter 40 of each of the drivers 90 generates 3 phase alternating current electric power based on the direct current voltage input between the high electric potential side terminal 401 and the low electric potential side terminal 402. Specifically, a U phase inverter 40U that generates U phase alternating current electric current I_{U} based on the direct current voltage, a V phase inverter 40V that generates V phase alternating current electric current I_{V} based on the direct current voltage, a W phase inverter 40W that generates W phase alternating current electric current I_{W} based on the direct current voltage, are provided in parallel. Since the configurations of the inverters 40U, 40V, and 40W for each of the phases are common, they are collectively referred to as the inverter(s) 40 in the following description as appropriate.

The inverter 40 is equipped with a high electric potential side terminal 401 to which a high direct current electric potential is input, a low electric potential side terminal 402 to which a low direct current electric potential is input, and an output terminal 403 that outputs an alternating current voltage varying between the direct current electric potentials of the input terminals 401 and 402. A high electric potential transistor 404H is connected between the high electric potential side terminal 401 and the output terminal 403, and a low electric potential transistor 404L is connected between the low electric potential side terminal 402 and the output terminal 403. Each of the transistors 404H and 404L is configured by an insulated gate bipolar transistor (IGBT), for example, but it may be configured by another type of transistor such as a MOSFET (metal-oxide-semiconductor field-effect transistor) or a bipolar transistor.

The high electric potential transistor 404H and the low electric potential transistor 404L are switched in their conduction states in accordance with the control signals from a control unit 60 (refer to Figure 3) applied to their respective control electrodes. Specifically, during normal operation of the inverter 40, the PWM signal generation unit 62 of the control unit 60 described below, performs the switching control to complementarily switch the conduction state of the transistor pair 404 configured by the high electric potential transistor 404H and the low electric potential transistor 404L, thereby converting the direct current electric power into the alternating current electric power. Here, the term "complementarily switching" means that when one of the transistors 404H and 404L is on, the other is controlled to be off. In other words, when the transistor 404H is on, the transistor 404L is controlled to be off, and when the transistor 404L is on, the transistor 404H is controlled to be off. As such, when the high electric potential transistor 404H is on, the high electric potential appears at the output terminal 403 and a positive current flows with the coil of the other phase, and when the low electric potential transistor 404L is on, the low electric potential appears at the output terminal 403 and a negative current flows with the coil of the other phase. By repeating such a switching control, alternating current electric power is generated as positive and negative currents flow alternately at the output terminal 403.

The 3 phase alternating current electric currents I_{U}, I_{V}, and I_{W} generated by the inverter 40 are supplied to the motor 50 that drives each of the driving portions of the electric construction machine 100. The motor 50 is a 3 phase brushless motor equipped with 3 phase coils of the U phase, the V phase, and the W phase. The U phase current I_{U} from the U phase inverter 40U flows to the U phase coil, the V phase current I_{V} from the V phase inverter 40V flows to the V phase coil, and the W phase current I_{W} from the W phase inverter 40W flows to the W phase coil. The inverters 40U, 40V, and 40W of each of the phases generate a rotating magnetic field by flowing alternating current electric currents I_{U}, I_{V}, and I_{W}, which are in different phases from each other, to the coils of each of the phases, based on the rotational position of the rotor detected by the plurality of (e.g., three) Hall elements of the motor 50. This rotating magnetic field produces the desired rotational power by rotating the rotor. It should be noted that the motor 50 may be any other type of motor driven by the alternating current electric power. Besides, the number of phases of the motor 50 is not limited to 3, but it can be any natural number of 2 or more.

The capacitor 20 and the resistor 30 provided in parallel to the inverter 40 have the function of stabilizing the operation of the inverter 40. For example, the capacitor 20 has the function of smoothing the direct current voltage input from the direct current electric power source 10 and adjusting the waveform, while the resistor 30 has the function of mitigating sudden fluctuations in the direct current voltage.

Returning to Figure 3, the arrangement of the driver 90 (a set of the capacitor 20, the resistor 30, and the inverter 40) corresponding to each of the driving portions will be described. In the example of Figure 3, the first to the fourth drivers 91 to 94 are provided in series between the high electric potential side line 11 connected to the high electric potential side terminal of the direct current electric power source 10 and the low electric potential side line 12 connected to the low electric potential side terminal of the direct current electric power source 10. Besides, the fifth driver 95 is provided in parallel with the first to the fourth drivers 91 to 94, between the high electric potential side line 11 and the low electric potential side line 12.

In the first to the fourth drivers 91 to 94 connected in series, the capacitors 21 to 24 function as the voltage dividing elements that divide the direct current voltage from the direct current electric power source 10 input between the high electric potential side line 11 and the low electric potential side line 12. And, the inverters 41 to 44 convert the divided direct current voltages input from the high electric potential side electrodes and the low electric potential side electrodes of each of the voltage dividing capacitors 21 to 24 into alternating current voltages and supply them to each of the motors 51 to 54. In this way, the direct current voltage from the direct current electric power source 10 is distributed among the first to the fourth drivers 91 to 94 connected in series. On the other hand, the direct current voltage from the direct current electric power source 10 is applied as it is to the fifth driver 95 connected in parallel with the first to the fourth drivers 91 to 94. It should be noted that the voltage dividing element that divides the direct current voltage is not limited to a capacitor, but it may be a plurality of resistors, the same number as the drivers, connected in series between the high electric potential side line 11 and the low electric potential side line 12.

The method of assigning the five drivers 91 to 95 to the five driving portions is arbitrary, but it is preferable to consider the load on each of the driving portions. For example, by assigning the fifth driver 95, to which the largest direct current voltage is always applied, to the lower traveling body 101 or the upper rotating body 102, which are subject to large loads at high frequency, it is possible to realize stable driving even when the load becomes large. In the following description, it is assumed that the fifth driver 95 is assigned to the upper rotating body 102. Besides, it is preferable to assign the first to the fourth drivers 91 to 94, to which the divided direct current voltages are applied, to a driving portion with a small load or to a plurality of driving portions with different timing of handling loads from each other.

For example, the boom 104, the arm 105, and the bucket 106, which constitute the working unit, are often driven at the same timing during a work, but the load on each of them is small. Therefore, the divided direct current voltage is sufficient to drive them. Besides, since it is rare that the lower traveling body 101 moves while the working unit is working or the working unit carries out a work while the lower traveling body 101 is moving, the timing at which loads are applied to the working unit and the lower traveling body 101 are different from each other. As such, by assigning the three driving portions (the boom 104, the arm 105, and the bucket 106) that constitute the working unit and the lower traveling body 101 to the first to the fourth drivers 91 to 94, electric power can be supplied to the boom 104, the arm 105, and the bucket 106 while the working unit is carrying out a work, and electric power can be supplied to the lower traveling body 101 while the lower traveling body 101 is running. In this way, efficient distribution of electric power among the working unit and the lower traveling body 101 is realized. The concrete method of distributing electric power will be described later.

It should be noted that, in the example of Figure 3 where the electric construction machine 100 has the five drivers 91 to 95, the four drivers 91 to 94 are connected in series and the one driver 95 is connected in parallel, but the number of the drivers connected in series may be any integer equal to or greater than 2, and the number of the drivers connected in parallel may be any integer equal to or greater than 0. If the numbers of the drivers connected in series are separately denoted in a parenthesis, the example in Figure 3 is expressed as (4, 1). Combinations such as (5), (3, 2), (3, 1, 1), (2, 2, 1), (2, 1, 1, 1, 1), and (1, 1, 1, 1, 1) are also possible as variants of the present example. Here, since the last variant (1, 1, 1, 1, 1, 1) is an example in which the five drivers 91 to 95 are provided in parallel between the high electric potential side line 11 and the low electric potential side line 12, the above effect of distributing electric power among the drivers connected in series is not realized. Conversely, since the first variant (5) is an example in which the five drivers 91 to 95 are provided in series between the high electric potential side line 11 and the low electric potential side line 12, electric power is distributed among all of the driving portions.

As described below, supply of electric power to some of the drivers connected in series (the drivers 91 to 94 in the example of Figure 3) can be disabled, and the surplus electric power can be supplied to other drivers. In case the total number of the drivers connected in series is N (4 in the example of Figure 3), where N is a natural number equal to or greater than 4, if the maximum number of the drivers for which the supply of electric power is disabled is limited to N - 2 (2 in the example of Figure 3), it is possible to realize a state where electric power is always supplied to at least two drivers. In such a case, since the direct current voltage from the direct current electric power source 10 is not concentrated on one driver (except for the driver 95 connected in parallel), each of the drivers can be configured by inexpensive components with low withstand voltage. The method of assigning such N drivers connected in series to each of the driving portions is arbitrary, but it is not limited to the following example in which N (4) drivers are assigned to the lower traveling body 101, the boom 104, the arm 105, and the bucket 106. For example, N (4) drivers may be assigned to the upper rotating body 102, the boom 104, the arm 105, and the bucket 106.

Next, the method of efficiently distributing electric power among the drivers connected in series (the drivers 91 to 94 in the example of Figure 3) will be described. In the following description, it is assumed that the four driving portions of the lower traveling body 101, the boom 104, the arm 105, and the bucket 106 are assigned to the first to the fourth drivers 91 to 94 in this order in accordance with the above example.

In the first electric power distribution method, the capacitance values of the voltage dividing capacitors 21 to 24 of each of the drivers 91 to 94 are utilized. For example, among the four driving portions, the capacitance value of the voltage dividing capacitor 21 of the lower traveling body 101, whose load is relatively large, is decreased, and the capacitance values of the voltage dividing capacitors 22 to 24 of the boom 104, the arm 105 and the bucket 106, whose loads are relatively small, are increased. Since the voltages between the electrodes of the voltage dividing capacitors 21 to 24 are inversely proportional to the capacitance values, the smaller the capacitance value, the larger the direct current voltage to be divided. As such, since a large direct current voltage is divided for the voltage dividing capacitor 21 with a small capacitance value, the lower traveling body 101 with a large load can be driven stably. It should be noted that the capacitance value of each of the voltage dividing capacitors 21 to 24 may be variable. In such a case, the load of each of the driving portions may be detected in real time from the electric power demand information acquired by the electric power demand information acquisition unit 70 described below, and the capacitance value of each of the voltage dividing capacitors 21 to 24 may be changed in real time accordingly.

In the second electric power distribution method, the control unit 60 controls the conduction state between the high electric potential side terminal 401 and the low electric potential side terminal 402 of each of the plurality of inverters 41 to 44, based on the electric power demand information of each of the plurality of motors 51 to 54. Specifically, the conduction state control unit 61 of the control unit 60 controls the conduction state of each of the plurality of inverters 41 to 44 by applying the control signal to each of the control electrodes of the transistors 404H and 404L of each of the plurality of inverters 41 to 44.

Figure 5 is a schematic diagram of the control signal applied by the control unit 60 to each of the control electrodes of the transistors 404H and 404L of each of the plurality of inverters 41 to 44. Figure 5 (A) shows an example of the control signal that the control unit 60 applies to the control electrode of the high electric potential transistor 404H, Figure 5 (B) shows an example of the control signal that the control unit 60 applies to the control electrode of the low electric potential transistor 404L, and Figure 5 (C) shows an example of the current flowing through the output terminal 403.

Here, the pulse P1 is generated by the conduction state control unit 61 of the control unit 60, and the pulse P2 is generated by the PWM signal generation unit 62 of the control unit 60.

The conduction state control unit 61 generates the pulse P1 that simultaneously turns on both transistors 404H and 404L of the inverter 40 (at least one of the four inverters 41 to 44) of the driving portion that does not need to be driven. When both transistors 404H and 404L are turned on, the direct current voltage between the high electric potential side terminal 401 and the low electric potential side terminal 402 of the inverter 40 being conductive becomes zero. Therefore, the inverter 40 is effectively disabled. As such, consumption of electric power by the inverter 40, which does not need to be operated, is prevented, and excess electric power is effectively consumed by other inverters connected in series.

Here, if the pulse P1 short-circuits between the high electric potential side terminal 401 and the low electric potential side terminal 402 of the inverter 40 while a large amount of electric charge is accumulated in the voltage dividing capacitor 20, an excessive short-circuit current due to the electric charge accumulated in the voltage dividing capacitor 20 may flow through the inverter 40. In order to prevent this, the conduction state control unit 61 may gradually increase the duty ratio of the pulse P1 applied to the control electrodes of both transistors 404H and 404L, when changing the conduction state between the high electric potential side terminal 401 and the low electric potential side terminal 402 of each of the plurality of inverters 40 into the conductive state. That is, by dividing the pulse P1 shown in Figure 5 into small segments and gradually increasing the duty ratio of the pulse P1 in each of the small segments from 0% to 100%, the generation of the excessive short-circuit current can be prevented. In other words, the duty ratio of the pulse P1 applied to the control electrodes of both transistors 404H and 404L at the conduction starting point in time (at the initial stage of the conductive state) is controlled to be smaller than the duty ratio of the pulse P1 applied to the control electrodes of the transistors 404H and 404L at one point in time at least after the conduction starting point in time.

It should be noted that, unlike the pulse P2 generated by the PWM signal generation unit 62 described next, the pulse P1 generated by the conduction state control unit 61 does not complementarily switch the conduction state of the transistor pair 404. In other words, when one transistor is on, the other transistor is also on, thereby the normal inverter operation is not performed.

The pulse P2 generated by the PWM signal generation unit 62 is a pulse width modulation (PWM) signal for the normal inverter operation of the inverters 41 to 44. In order to generate the sinusoidal alternating current shown in Figure 5 (C), a pulse group P21 with different widths is generated to intermittently turn on the high electric potential transistor 404H as shown in Figure 5 (A) while the sinusoidal wave is positive, and a pulse group P22 with different widths is generated to intermittently turn on the low electric potential transistor 404L as shown in Figure 5 (B) while the sinusoidal wave is negative.

It should be noted that, since the conduction state control unit 61 and the PWM signal generation unit 62 have the common function of generating the control signal (the pulse) to the transistor pair 404 of the inverter 40, they can be configured by the same or common hardware resources. As described below, the stop phase, in which the pulse P1 of the conduction state control unit 61 is applied to each of the plurality of inverters 40, and the normal phase, in which the pulse P2 of the PWM signal generation unit 62 is applied to each of the plurality of inverters 40, are dynamically switched in accordance with the operation of the electric construction machine 100. If the pulses P1 and P2 are switched from one to the other in a short period of time when the phases are switched, each of the components of the driver 90, such as the capacitor 20, the resistor 30, and the inverter 40, may be overloaded. Therefore, it is preferrable to gradually shift from one pulse to the other pulse, by gradually changing the duty ratio.

As a variant of Figure 5, the pulses P2 for the normal inverter operation generated by the PWM signal generation unit 62 may be interwoven with the pulses P1 for the direct current voltage control between the inverter terminals generated by the conduction state control unit 61 at a prescribed ratio. In such a case, the inverter 40 performs the normal inverter operation by the pulse P2, but the direct current voltage between the high electric potential side terminal 401 and the low electric potential side terminal 402 is reduced in accordance with the ratio of the interwoven pulse P1, thereby enabling the inverter operation at low voltage.

In order to switch the pulse P1 (the conduction state control unit 61) and the pulse P2 (the PWM signal generation unit 62) in Figure 5, the inverter control apparatus 1 is further equipped with an electric power demand information acquisition unit 70. The electric power demand information acquisition unit 70 is equipped with an electric current value acquisition unit 71 and a drive command acquisition unit 72 to acquire the electric power demand information of the motors 51 to 55 of each of the driving portions. Here, the electric current value acquired by the electric current value acquisition unit 71 and the drive command acquired by the drive command acquisition unit 72 are examples of the electric power demand information indicating the electric power demand of each of the motors 50.

The electric current value acquisition unit 71 acquires the measured values of the currents I_{V}, I_{V}, and I_{W} of the coils of each of the phases of each of the motors 50 as the measured information concerning the operating state of each of the motors 50. The control unit 60 can understand the operating state of each of the motors 50 based on the acquired electric current values. Then, the PWM signal generation unit 62 applies the pulse P2 for the normal inverter operation to the inverter 40 corresponding to the motor 50 that is operating, and the conduction state control unit 61 applies the pulse P1 for disabling the inverter operation and preventing unnecessary consumption of electric power to the inverter 40 corresponding to the motor 50 that is not operating. It should be noted that the measured information concerning the operating state of each of the motors 50 is not limited to the measured values of the currents I_{U}, I_{V}, and I_{W} of the coils in each of the phases, but it may also be the measured value of rotational speed of the rotor. Such measured information are examples of the electric power demand information indicating the electric power demand of each of the motors 50.

The drive command acquisition unit 72 acquires the drive command for each of the motors 50 from the drive command issuing unit 80, such as an operation lever operated by an operator of the electric construction machine 100, as the electric power demand information. The control unit 60 can understand the operation to be taken by each of the motors 50 based on the acquired drive command. Then, the PWM signal generation unit 62 applies the pulse P2 for the normal inverter operation in accordance with the drive command from the drive command issuing unit 80 to the inverter 40 corresponding to the motor 50 for which the operation is required, and the conduction state control unit 61 applies the pulse P1 for disabling the inverter operation and preventing unnecessary consumption of electric power to the inverter 40 corresponding to the motor 50 for which the operation is not required.

Figure 6 schematically shows the load of each of the driving portions during various operations of the electric construction machine 100. In accordance with the above example, the four driving portions of the lower traveling body 101 (shown as "traveling" in the present figure), the boom 104, the arm 105, and the bucket 106 are assigned to the first to the fourth drivers 91 to 94 connected in series in this order, and the upper rotating body 102 (shown as "rotation" in the present figure) is assigned to the fifth driver 95 connected in parallel.

During the excavation, the boom 104, the arm 105, and the bucket 106, which constitute the working unit, operate at the maximum load, while the lower traveling body 101 moves for small distances. Since the load of the lower traveling body 101 is small, the inverter operation may be realized at a low voltage, by interweaving the pulse P1 of the conduction state control unit 61 with the pulse P2 of the PWM signal generation unit 62 applied to the driver 91 that drives the lower traveling body 101. This allows excess electric power to be distributed to the three driving portions of the working unit with large loads. Besides, in case the upper rotating body 102 does not need to be driven during the excavation, the driver 95 may be disabled by the pulse P1 of the conduction state control unit 61.

During the slope pushing, the upper rotating body 102 rotates while the lower traveling body 101 is stopped, and the working unit pushes the slope. Since the lower traveling body 101 does not need to be driven, the driver 91 is disabled by the pulse P1 of the conduction state control unit 61 in order to reduce the consumption of electric power. Although a large load is applied to the upper rotating body 102, the maximum direct current voltage is always applied to the fifth driver 95 that drives it, thereby enabling the stable driving.

During the 90 degree rotating loading, the excavated materials and the like scraped by the working unit are loaded into a predetermined location by rotating the upper rotating body 102, while the lower traveling body 101 is stopped. Since there is no need to drive the lower traveling body 101, the driver 91 is disabled by the pulse P1 of the conduction state control unit 61 in order to distribute the excess electric power to the three driving portions of the working unit with large loads. Although a large load is applied to the upper rotating body 102, the maximum direct current voltage is always applied to the fifth driver 95 that drives it, thereby enabling the stable driving.

During the traveling, the lower traveling body 101 moves, while the upper rotating body 102, the boom 104, the arm 105, and the bucket 106 are stopped. Since there is no need to drive the boom 104, the arm 105, and the bucket 106, the drivers 92 to 94 are disabled by the pulse P1 of the conduction state control unit 61 in order to distribute the excess electric power to the driver 91 of the lower traveling body 101 with a large load. This allows the driver 91 to be driven stably, since the maximum direct current voltage is applied to it. Besides, in case the upper rotating body 102 does not need to be driven during the traveling, the driver 95 may be disabled by the pulse P1 of the conduction state control unit 61.

As described above, by applying the pulse P1 of the conduction state control unit 61 to the driver of the driving portion that does not need to be driven or the driving portion with a small load, during the various operations of the electric construction machine 100, the consumption of electric power at such a driver can be reduced, and the excess electric power can be distributed to other drivers with large loads. As such, electric power consumed by the electric construction machine 100 can be saved according to the present embodiment.

Figure 7 is a schematic configuration diagram of a variation of the inverter control apparatus 1. In the present variation, the three drivers 91 to 93 are connected in series, and the drivers 94 and 95 are connected in parallel with them, respectively. In accordance with the above notation, the configuration is expressed as (3, 1, 1). For example, the boom 104, the arm 105, and the bucket 106, which constitute the working unit, are assigned to the drivers 91 to 93, the lower traveling body 101 is assigned to the driver 94, and the upper rotating body 102 is assigned to the driver 95.

The inverter control apparatus 1 is equipped with a step up / step down circuit 13 that can step up and step down the direct current voltage input to the drivers 94 and 95 connected in parallel. The step up / step down circuit 13 is a so-called step up / step down chopper circuit or buck-boost converter, which is equipped with two semiconductor switches 131 and 132 using transistors, a reactor 133, and a capacitor 134.

The capacitor 134, which is configured by an electric double-layer capacitor (EDLC) or the like, stores the regenerative electric power generated by the motor 54 of the lower traveling body 101 and the motor 55 of the upper rotating body 102. By changing the duty ratio in the switching control of the semiconductor switches 131 and 132, the regenerative electric power is stepped up or stepped down via the reactor 133, and is supplied to each of the driving portions. These regenerative electric powers are mainly supplied as auxiliary electric power to the lower traveling body 101 and upper rotating body 102, which are subject to rapid load changes due to acceleration and deceleration, but are also supplied to the boom 104, the arm 105, and the bucket 106 in case where the load of the working unit is temporarily increased, for example. As such, according to the step up / step down circuit 13, further effective utilization of the electric power in each of the driving portions of the electric construction machine 100 is realized. It should be noted that the diode 14 of the high electric potential side line 11 is provided so that the regenerative electric power does not adversely affect the direct current electric power source 10 as the main electric power source.

The present invention has been described above based on embodiments. It will be understood by those skilled in the art that the embodiments are examples, that various variations are possible in the combination of the respective components and/or the respective processing steps, and that such variations are also within the scope of the present invention.

Although the embodiment describes an example of the EMA in which the motor 50 directly drives each of the driving portions of the electric construction machine 100, each of the driving portions of the electric construction machine 100 may be indirectly driven by the motor 50. For example, in case each of the driving portions is directly driven by a hydraulic motor, a hydraulic cylinder, or another hydraulic device, the actuator may be configured as the EHA by using the motor 50 for the control of a hydraulic valve that controls the hydraulic pressure to each of the hydraulic devices.

It should be noted that the functional configuration of each device described in the embodiment can be realized by hardware resources or software resources, or by collaboration of hardware resources and software resources. As hardware resources, processor, ROM, RAM, and other LSI can be utilized. As software resources, operating system, application, and other program can be utilized.

In the embodiments disclosed in the present specification, some or all of a plurality of functions provided in a distributed manner may be provided by incorporating into an integral function, and conversely an integral function incorporating a plurality of functions may be provided by distributing some or all of the plurality of functions. Regardless of whether the functions are incorporated or distributed, it is sufficient if they are configured so that the purpose of the present invention can be achieved.

The present invention relates to an inverter control apparatus.

### REFERENCE SIGNS LIST

1 inverter control apparatus, 10 direct current electric power source, 11 high electric potential side line, 12 low electric potential side line, 13 step up / step down circuit, 20 capacitor, 40 inverter, 50 motor, 60 control unit, 61 conduction state control unit, 62 PWM signal generation unit, 70 electric power demand information acquisition unit, 71 electric current value acquisition unit, 72 drive command acquisition unit, 80 drive command issuing unit, 90 driver, 100 electric construction machine, 101 lower traveling body, 102 upper rotating body, 104 boom, 105 arm, 106 bucket, 401 high electric potential side terminal, 402 low electric potential side terminal, 403 output terminal, 404 transistor pair.

## Claims

1. An inverter control apparatus comprising:
a direct current voltage input unit to which a direct current voltage is input between a high electric potential side line and a low electric potential side line;
a plurality of voltage dividing elements provided in series between the high electric potential side line and the low electric potential side line, to divide the direct current voltage;
a plurality of inverters that convert the divided direct current voltage, which is input from a high electric potential side terminal connected to a high electric potential side electrode of each of the plurality of voltage dividing elements and a low electric potential side terminal connected to a low electric potential side electrode of each of the plurality of voltage dividing elements, into alternating current voltage to supply to each of a plurality of actuators;
an electric power demand information acquisition unit that acquires electric power demand information of each of the plurality of actuators; and
a control unit that controls the conduction state between the high electric potential side terminal and the low electric potential side terminal of each of the plurality of inverters, based on the electric power demand information of each of the plurality of actuators.

2. The inverter control apparatus according to claim 1, wherein
each of the plurality of inverters is equipped with a transistor that switches the conduction state between the high electric potential side terminal and the low electric potential side terminal, and
the control unit applies a control signal by the pulse width modulation to the control electrode of the transistor.

3. The inverter control apparatus according to claim 2, wherein
the voltage dividing element is a capacitor, and
when changing the conduction state between the high electric potential side terminal and the low electric potential side terminal of each of the plurality of inverters into the conductive state, the control unit uses the duty ratio of the control signal applied to the control electrode of the transistor at the conduction starting point in time, which is smaller than the duty ratio of the control signal applied to the control electrode of the transistor at one point in time at least after the conduction starting point in time.

4. The inverter control apparatus according to any of claims 1 to 3, further comprising an other inverter provided in parallel with the plurality of inverters between the high electric potential side line and the low electric potential side line, which converts the direct current voltage input between the high electric potential side terminal and the low electric potential side terminal into an alternating current voltage to supply to an actuator.

5. The inverter control apparatus according to claim 4, wherein
the inverter control apparatus is for a construction machine equipped with a traveling unit that can travel on the ground, a rotating unit that is rotatably attached to the traveling unit, and a working unit that is attached to the rotating unit to carry out a work,
the other inverter supplies alternating current voltage to an actuator that drives the traveling unit or the rotating unit.

6. The inverter control apparatus according to claim 5, further comprising a step up / step down circuit capable of increasing and decreasing the direct current voltage input between the high electric potential side terminal and the low electric potential side terminal of the other inverter.

7. The inverter control apparatus according to any of claims 1 to 6, wherein
the electric power demand information is measured information concerning the operating state of each of the plurality of actuators, and
the control unit changes the conduction state between the high electric potential side terminal and the low electric potential side terminal of the inverter corresponding to the actuator that is not operating into the conductive state.

8. The inverter control apparatus according to claim 7, wherein
each of the plurality of actuators is a motor equipped with a coil, and
the measured information concerning the operating state is a measured value of the current of the coil.

9. The inverter control apparatus according to any of claims 1 to 8, wherein
the electric power demand information is a drive command for each of the plurality of actuators, and
the control unit changes the conduction state between the high electric potential side terminal and the low electric potential side terminal of the inverter corresponding to the actuator for which no drive command has been issued into the conductive state.

10. The inverter control apparatus according to any of claims 1 to 9, wherein
there are N voltage dividing elements and N inverters, where N is a natural number greater than or equal to 3,
the control unit controls the conduction state of the N inverters, by setting the maximum number of the inverters to simultaneously become conductive between the high electric potential side terminal and the low electric potential side terminal to N - 2.

11. The inverter control apparatus according to claim 10, wherein
the inverter control apparatus is for a construction machine equipped with a lower traveling body that can travel on the ground, an upper rotating body that is rotatably attached to the lower traveling body, a boom capable of being raised and lowered that is attached to the upper rotating body, an arm that is bendably attached to the boom, and a bucket that is bendably attached to the arm, and
the N inverters, where N is a natural number greater than or equal to 4, include the inverters that supply alternating current voltage to the actuators that drive the upper rotating body, the boom, the arm, and the bucket.

12. The inverter control apparatus according to any of claims 1 to 11, wherein the voltage dividing element is a capacitor.

13. A driving apparatus comprising:
a plurality of actuators;
a direct current voltage input unit to which a direct current voltage is input between a high electric potential side line and a low electric potential side line;
a plurality of voltage dividing elements provided in series between the high electric potential side line and the low electric potential side line, to divide the direct current voltage;
a plurality of inverters that convert the divided direct current voltage, which is input from a high electric potential side terminal connected to a high electric potential side electrode of each of the plurality of voltage dividing elements and a low electric potential side terminal connected to a low electric potential side electrode of each of the plurality of voltage dividing elements, into alternating current voltage to supply to each of the plurality of actuators;
an electric power demand information acquisition unit that acquires electric power demand information of each of the plurality of actuators; and
a control unit that controls the conduction state between the high electric potential side terminal and the low electric potential side terminal of each of the plurality of inverters, based on the electric power demand information of each of the plurality of actuators.
